Europäisches Patentamt

European Patent Office

Office européen des brevets

(19)

(11) Veröffentlichungsnummer: **0 001 781**
**B1**

(12) **EUROPÄISCHE PATENTSCHRIFT**

(45) Veröffentlichungstag der Patentschrift: **30.09.81**

(21) Anmeldenummer: **78101158.0**

(22) Anmeldetag: **16.10.78**

(51) Int. Cl.³: **C 04 B 43/02,**
**D 04 H 1/42, F 01 N 1/24**

(54) **Verfahren und Vorrichtung zur Herstellung einer aus Mineralfasern und Metallfasern, vorzugsweise Basaltwolle und Edelstahlwolle, bestehenden Verbundmatte und Formteil zur Auskleidung von Schalldämpfern**

(30) Priorität: **18.10.77 DE 2746796**

(43) Veröffentlichungstag der Anmeldung:
**16.05.79 Patentblatt 79/10**

(45) Bekanntmachung des Hinweises auf die Patenterteilung:
**30.09.81 Patentblatt 81/39**

(84) Benannte Vertragsstaaten:
**BE DE FR GB LU NL SE**

(56) Entgegenhaltungen:
**DE - A - 2 429 143**
**DE - B - 1 274 490**
**DE - C - 659 538**
**FR - A - 1 450 140**
**GB - A - 1 371 824**
**US - A - 3 081 207**

(73) Patentinhaber: **SAINT-GOBAIN INDUSTRIES**
**62, Bd Victor Hugo**
**F-92209 Neuilly sur Seine (FR)**
(84) **BE FR GB LU NL SE**
(73) Patentinhaber: **Grünzweig + Hartmann und**
**Glasfaser AG**
**Bürgermeister Grünzweig Strasse 1-47**
**D-6700 Ludwigshafen (DE)**
(84) **DE**

(72) Erfinder: **Schweinfurth, Gustav**
**Steinstr. 54**
**D-6701 Dannstadt (DE)**
Erfinder: **Sommer, Rolf**
**Mutterstadter Str. 5**
**6701 Danstadt (DE)**
Erfinder: **Ungerer, Heinz-Jürgen Dipl.-Ing.**
**Bensheimer Str. 39**
**6806 Viernheim (DE)**

(74) Vertreter: **Betzler, Eduard, Dipl.-Phys., et al**
**Eisenacher Strasse 17**
**D-8000 München 40 (DE)**

Courier Press, Leamington Spa, England.

## Verfahren und Vorrichtung zur Herstellung einer aus Mineralfasern und Metallfasern, vorzugsweise Basaltwolle und Edelstahlwolle, bestehenden Verbundmatte und Formteil zur Auskleidung von Schalldämpfern

Die Erfindung betrifft ein Verfahren zur Herstellung einer aus Mineralfasern und Metallfaren, vorzugsweise Basaltwolle und Edelstahlwolle sowie Bindemittel bestehenden Verbundmatte.

Solche Verbundmatten eignen sich insbesondere zur Verwendung als hitze- und korrosionsbeständiger Werkstoff für die schallschluckende Füllung von Schalldämpfern an Verbrennungskraftmaschinen.

In der DT—Gbm—Schrift 72 23 051 sind hitze- und korrosionsbeständige Einbauteile für Schalldämpfer beschrieben, bei denen es sich um eine Vliesstoffbahn aus hitze- und korrosionsbeständigem Werkstoff handelt, bei der eine Schicht aus Mineralfasern mit einer Schicht aus Metallfasern verbunden ist. Die Verbindung der Schichten kann auf verschiedene Art hergestellt sein, wobei insbesondere auch daran gedacht ist, einen solchen Körper als Preßling auszugestalten. Die beiden Schichten werden miteinander vernadelt oder versteppt, oder sie werden mit Hilfe von Garn oder Draht miteinander verbunden oder mittels irgendwelcher Kleber zusammengefügt. Dabei wird immer so vorgegangen, daß von der Metallfaser die harte Pulsation der Abgasströme aufgefangen wird und die dahinter liegende Mineralwolle auf diese Weise geschützt ist, so daß die Fasern der Mineralwolle nicht mehr brechen oder in anderer Weise beeinträchtigt werden können.

Die Verbindung einer Schicht aus Mineralfasern und einer Schicht aus Metallfasern mit Hilfe von Garn oder Draht läßt wegen der erforderlichen großen Stich- und Nahtabstände der Steppnähte nur die Herstellung verhältnismäßig großer Teile zu. Bei Kleinteilen würden die Bahnstücke entlang der gezogenen Steppnähte zerfallen.

Für die Verbindung durch Versteppung wird deshalb im allgemeinen ein Trägermaterial verwendet, was die Herstellung derartiger Matten verteuert. Aus Kostengründen wird deshalb häufig Papier verwendet, was jedoch brennbar ist und aus Sicherheitsgründen abgelehnt werden muß. Außerdem verhindert bei versehentlich falschem Einbau im Schalldämpfer das Papier die Schallabsorption. Deshalb wird von den Schalldämpferherstellern häufig dieses Papier entfernt, was die Herstellungskosten der Schalldämpfer steigen läßt.

Es ist auch bereits bekannt, entsprechende Formteile herzustellen, bei der um einen Metallfaserschlauch lose Mineralfaser angeordnet wird, die durch einen Mantel aus Papier in dieser Lage fixiert ist.

Auch hier steht dem gewünschten Einsatz die Brennbarkeit des Papiers entgegen. Außerdem ist ein wesentlich höherer Metallfaseranteil erforderlich, da der Metallfaserschlauch zur Stabilität dieser Formteile beiträgt und deshalb entsprechend fest ausgebildet sein muß.

Auch die Verbindung der Mineralfaserschicht mit der Metallfaserschicht durch einen Kleber führt nicht zum Erfolg, weil der Kleber durch die in Schalldämpfern herrschenden Temperaturen zersetzt werden kann, wodurch sich die Schichten voneinander trennen können und damit die Auskleidung ihren Zusammenhalt verliert.

Hier will die Erfindung Abhilfe schaffen. Die Erfindung, wie sie in den Ansprüchen gekennzeichnet ist, löst die Aufgabe, ein Verfahren zur Herstellung einer aus Mineralfasern und Metallfasern, vorzugsweise Basaltwolle und Edelstahlwolle bestehenden Verbundmatte zu schaffen, die sich insbesondere zur Verwendung als hitze- und korrosionsbeständiger Werkstoff für die Schallschluckende Füllung von Schalldämpfern an Verbrennungskraftmaschinen eignet.

Der Durch die Erfindung erzielbare Vorteil besteht im wesentlichen darin, daß auf die nachträgliche Kaschierung von Mineralfasermatten mit Metallfasern verzichtet werden kann, die Verwendung eines zusätzlichen Klebers entfällt, und schließlich keine Vernadelung des Verbundwerkstoffes vorgenommen werden muß, und trotzdem die Verbundmatte einen ausreichenden inneren Halt aufweist.

Die Verbindung der Mineralfasern mit den Metallfasern wird bereits im Zuge der Herstellung der Mineralfasermatte erreicht. Es ist ferner möglich, durch Einführen mehr oder weniger großer Mengen an Metallfasern eine entsprechende Durchdringung zwischen Metallfasern und Mineralfasern zu erreichen.

Besonders vorteilhaft läßt sich die Erfindung verwirklichen, wenn die Metallfasern in den Vorgang zur Herstellung einer Mineralfasermatte mit maximal 1% Bindemittelanteil eingespeist werden.

Aus der DT—Gbm—Schrift 76 28 169 ist es zwar bereits bekannt, daß Formteile aus Mineralfasern mit maximal 1% Bindemittelanteil sich auch gut für Schalldämpfer eignen und daß bei diesen Formteilen wesentlich weniger Mineralfasern erforderlich sind. Jedoch weisen solche Formteile den Nachteil auf, daß sie anschließend durch mechanische Bearbeitung den Konturen des Schalldämpfers angepaßt werden müssen, was mit Kosten für die Bearbeitung sowie mit Materialverlust verbunden ist.

Kunstharzgebundene Mineralfasermatten werden in allgemeinen dadurch hergestellt, daß bereits mit Bindemittel besprühte Mineralfasern unterhalb des Zerfaserungsaggregates oder der Zerfaserungsaggregate auf ein Transportband abgelegt werden. Dieses Transportband führt die derart gebildete Mineralfasermatte durch einen Trockentunnel, in welchem die Mineralfasermatte auf solldicke gepreßt und das Bindemittel durch Wärme ausgehärtet wird.

Dieses bekannt Verfahren wird für die Zwecke der Erfindung dadurch genutzt, daß lose oder vliesartige Metallfasern auf oder unter die Mineralfasermatte vor dem Trockentunnel eingespeist werden. Die Metallfasern gelangen also bereits vor Aushärtung der mit Bindemittel versehenen Mineralfasermatte mit dieser zusammen. Im Trockentunnel werden dann die beiden Materialien zusammengepreßt und das Bindemittel wird ausgehärtet. Dabei entsteht ein vollflächiger Verbund zwischen beiden Werkstoffen. Einmal verklebt das Bindemittel in der Mineralfasermatte die Mineralfasern mit den Metallfasern, ohne daß die zusätzliche Beigabe eines Klebstoffes erforderlich wäre oder ohne daß ein geschlossener Klebefilm gebildet werden müßte. Das Schallabsorptionsvermögen der Mineralfaserschicht bleibt somit in vollem Umfange erhalten. Zum anderen verkrallen sich die Metallfasern mit den Mineralfasern während des Ablagevorganges, was den Verbund zwischen beiden Faserarten in der gebildeten Verbundmatte erhöht.

Nach der US—A 3 081 207 werden Fasern erzeugt, indem man aus einem Feeder Fäden auszieht und diese mit Hilfe eines Gebläses zerfasert. Nach diesem Zerfaserungsvorgang werden auf die gebildeten Fasern aus Düsen Bindemittel aufgebracht und die Fasern zu einer Matte vereinigt. Auf die derart gebildete Matte werden an anderer Stelle gebildete Fasern, insbesondere Stapelfasern mit Hilfe einer Schwenkvorrichtung abgelegt, so daß aufgrund des Bindemittelgehaltes der Matte auch diese Fasern mit in die Matte eingebunden werden.

Eine solche Verfahrensführung ist allerdings unmöglich, wenn als zweite Komponente der Matte Metallfasern zum Einsatz kommen. Es ist technisch nicht möglich, Metallfasern in der Art zu fördern, wie es bei Stapelfasern geschieht. Metallfasern sind scharfgratige Fasern, die sich miteinander verhaken, wie es beispielsweise von Metallwolle her bekannt ist. Eine Förderung in einer Leitung und über eine Düse, die noch dazu über ein schwenkbares Zwischenglied angeschlossen sein soll, ist bei Metallfasern nicht möglich. Die Metallfasern würden sich verhaken und Knäuel bilden, nicht aber als einzelne lose Fasern aus der Düse austreten.

Deswegen wird gemäß der Erfindung der Metallfaseranteil bei der Entstehung der Mineralfasern oder allenfalls unmittelbar danach aufgebracht. Der Verbund zwischen Mineralfasermatte und Metallfasern erfolgt durch Einkrallen der Metallfasern in die Mineralfasermatte und nicht durch ein Bindemittel. Das Bindemittel dient äußerstenfalls dazu, um auch die Mineralfasern zu binden, die nicht mit den Metallfasern verkrallt sind.

Zum Stande der Technik gehört nach der FR—A—1 450 140 auch noch die Herstellung nicht brennbarer Platten aus Bindemittel enthaltenden Mineralfasern und Metalldraht bzw. Drahtnetzen. Der Einbau von Drähten und Drahtnetzen soll die Zugfestigkeit solcher Platten nach allen Richtungen erhöhen. Ein Verkrallen kann nicht stattfinden, weil Metalldrähte, auch bei Verwendung in Metallnetzen glatte Oberflächen aufweisen, die ein Verkrallen zwischen Mineralfasern und Metalldrähten grundsätzlich ausschließen.

Aus einer erfindungsgemäß hergestellten Verbundmatte lassen sich kleinste Zuschnitte herstellen, ohne daß die Gefahr besteht, daß sich Metallfasern und Mineralfasern voneinander trennen. Infolge der ausgezeichneten mechanischen Eigenschaften einer solchem Verbundmatte ist auch die Herstellung von beispielsweise Stanzteilen möglich, wodurch die Herstellung von Kleinteilen mechanisiert werden kann.

Es hat sich gezeigt, daß erfindungsgemäß hergestellte Verbundmatten aus Mineralfasern und Metallfasern mit zunehmener Dicke und Dichte immer weniger flexibel sind und zunehmend den Charakter einer festen Platte annehmen. Dieser zunehmenden Verfestigung kann erwünschtenfalls in weiterer Ausbildung der Erfindung dadurch entgegengewirkt werden, daß das Bindemittel in die Mineralfaserplatte derart eingeführt wird, daß sich sein Anteil in Abhängigkeit von Dicke und Dichte der Mineralfasermatte von der einen Mattenseite zur anderen Mattenseite verlagert.

Damit ist es möglich, Verbundmatten aus Mineralfasern und Metallfasern bis ca. 60 mm Dicke und mit einem Raumgewicht von 100 kg/m³ herzustellen, die eine ausreichende Flexibilität aufweisen.

Das Verfahren nach der Erfindung wird zweckmäßig auf einer Vorrichtung durchgeführt, mit wenigstens einem Zerfaserungsaggregat zur Herstellung der Mineralfasern und einem Trockentunnel, der von der aus dem Zerfaserungsaggregat kommenden Mineralfasermatte mit einem Bindemittelanteil von maximal 1% durchlaufen wird, wobei erfindungsgemäß eine Einführungsvorrichtung für Metallfasern zwischen Zerfaserungsaggregat und Trockentunnel vorgesehen ist, so daß die Metallfasern unter oder auf die Mineralfaserbahn gebracht werden können.

Soll eine Verbundmatte hergestellt werden, bei der sich der Anteil des Bindemittels in Abhängigkeit von Dicke und Dichte der Mineralfasermatte von der einen Mattenseite zur anderen verlagert, dann wird eine Vorrichtung gewählt, die mehrere hintereinander angeordnete Zerfaserungsaggregate aufweist, auf die der Trockentunnel folgt und bei der unterhalb der Zerfaserungsaggregate jeweils Düsen angeordnet sind, die der Einführung des Bindemittels in den abwärts gerichteten Mineralfaserstrom dienen und die erfindungsgemäß zur Erzielung der Verlagerung des Bindemittelanteils in Abhängigkeit von Dicke und Dichte der Mineralfasermatte gesteuert sind und/oder unterschiedliche Düsenleistungen aufweisen.

Schließlich ist Gegenstand der Erfindung auch ein Formteil, der aus einer nach der Erfindung hergestellten Matte gebildet ist und zweckmäßig zur Auskleidung von Schalldämpfern an Auspuffrohren, insbesondere an Kraftfahrzeugen dient, wobei die Metallfaserbeschichtung vorzugsweise ins Innere des die Abgase führenden Raumes weist.

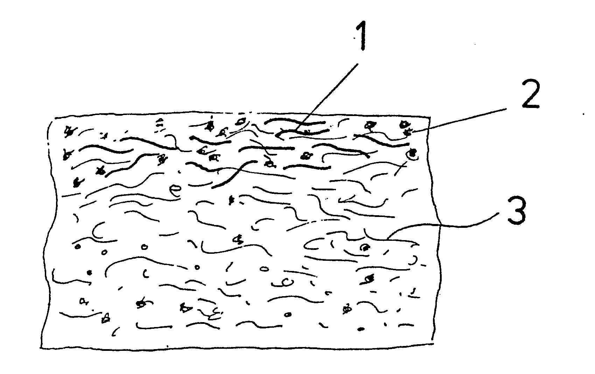

## Patentansprüche

1. Verfahren zur Herstellung einer aus Mineralfasern und Metallfasern, vorzugsweise Basaltwolle und Edelstahlwolle, sowie Bindemittel bestehenden Verbundmatte, insbesondere zur Verwendung als hitze- und korrosionsbeständiger Werkstoff für die schallschluckende Füllung von Schalldämpfern an Verbrennungskraftmaschinen, dadurch gekennzeichnet, daß die Metallfasern bei oder unmittelbar nach der Ablage der mit Bindemittel versehenen Mineralfasern zur Matte mit den Mineralfasern so kombiniert werden, daß die Metallfasern in die Mineralfasermatte eingekrallt sind.

2. Verfahren nach Anspruch 1, dadurch gekennzeichnet, daß die Metallfasern in den Vorgang zur Herstellung einer Mineralfasermatte mit maximal 1% Bindemittelanteil eingespeist werden.

3. Verfahren nach Anspruch 2, dadurch gekennzeichnet, daß das Bindemittel in die Mineralfasermatte derart eingeführt wird daß sich sein Anteil in Abhängigkeit von Dicke und Dichte der Mineralfasermatte von der einen Mattenseite zur anderen verlagert.

4. Vorrichtung zur Durchführung des Verfahrens nach Anspruch 1 und 2 mit wenigstens einem Zerfaserungsaggregat zur Herstellung der Mineralfasermatte und einem Trockentunnel, der von der aus dem Zerfaserungsaggregat kommenden Mineralfasermatte mit einem Bindemittelanteil von maximal 1% durchlaufen wird, gekennzeichnet durch eine Einführungsvorrichtung für Metallfasern zwischen Zerfaserungsaggregat und Trockentunnel.

5. Vorrichtung nach Anspruch 4 zur Durchführung des Verfahrens nach Anspruch 3 mit mehreren hintereinander angeordneten Zerfaserungsaggregaten, auf die der Trockentunnel folgt, und mit unterhalb der Zerfaserungsaggregate jeweils angeordneten Düsen für die Einführung des Bindemittels in den abwärts gerichteten Mineralfaserstrom, dadurch gekennzeichnet, daß die Düsen zur Erzielung der Verlagerung des Bindemittelanteils in Abhängigkeit von Dicke und Dichte der Mineralfasermatte gesteuert sind und/oder unterschiedliche Düsenleistung aufweisen.

6. Aus einer nach dem Verfahren nach Anspruch 1 bis 3 hergestellten matte gebildetes Formteil zur Auskleidung von Schalldämpfern an Auspuffrohren, insbesondere von Kraftfahrzeugen, bei dem die Metallfaserschicht ins Innere des die Abgase führenden Raumes weist.

## Claims

1. A process for making a compound mat, made up of mineral fibers and metal fibers, more specially basalt wool and stainless steel wool together with a binder, more specially for use as a heat and corrosion-resistant material for the sound absorbing filling of mufflers of IC engines, characterized in that the metal fibers on, or at once after, the putting into position of the mineral fibers having binder for forming the mat are so joined up with the mineral fibers that the metal fibers are hooked into the mineral fiber mat.

2. A process as claimed in claim 1, characterized in that the metal fibers are supplied to the operation for producing a mineral fiber mat with, at the most, 1% of binder.

3. A process as claimed in claim 2, characterized in that the binder is so worked into the mineral fiber mat that its level undergoes a change, in a way dependent on the thickness and density of the mineral fiber mat, from one side of the mat to the other.

4. An apparatus for undertaking the process as claimed in claims 1 and 2 with at least one fibrilating unit for producing the mineral fiber mat and a drying tunnel, having the mineral fiber mat (coming from the fibrilating unit) running through it with a binder level of, at the most, 1%, characterized by an input system for metal fibers between the fibrilating unit and the drying tunnel.

5. An apparatus as claimed in claim 4 for undertaking the process as claimed in claim 3 with a number of fibrilating units placed one after the other and having the drying tunnel placed thereafter, and with nozzles, placed in each case under the fibrilating units, for the input of the binder into the downwardly running mineral fiber current, characterized in that for producing the change in the level of the binder in dependence on the thickness and density of the mineral fiber mat, the nozzles are controlled and/or have different nozzle rates.

6. A mat, produced by a mat as produced by the process of anyone of claims 1 to 3, for lining mufflers on exhaust pipes, more specially of motor vehicles, in the case of which the metal fiber layer is turned towards the space through which the exhaust gases are moved.

## Revendications

1. Procédé pour la fabrication d'un matelas composite consistant en fibres minérales et en fibres métalliques, de préférence laine de basalte et d'acier inoxydable, ainsi qu'en liant, particulièrement pour l'application comme matière résistant à la chaleur et à la corrosion utilisable comme corps de remplissage absorbant a son pour silencieux dans des machines à combustion interne, caractérisé en ce que les fibres métalliques sont combinées avec les fibres minérales munies de liant lors de leur dépôt pour former un matelas ou bien immédiatement après leur dépôt, de telle sorte que les fibres métalliques sont accrochées dans le matelas de fibres minérales.

2. Procédé selon la revendication 1, caractérisé en ce que l'on introduit les fibres métalliques dans le processus de fabrication d'un matelas de fibres minérales contenant au maximum 1% de liant.

3. Procédé selon la revendication 2, caractérisé en ce que l'on introduit le liant dans le matelas de fibres minérales de façon telle que sa proportion change d'un côté du matelas à l'autre sous la dépendance de l'épaisseur et de la densité du matelas de fibres minérales.

4. Appareil pour la mise en oeuvre du procédé selon les revendications 1 et 2, comportant au moins un appareil de fibrage pour la fabrication du matelas de fibres minérales et un tunnel de séchage qui est parcouru par le matelas de fibres minérales venant de l'appareil de fibrage et ayant une teneur en liant de 1% au maximum, caractérisé par un dispositif d'introduction de fibres métalliques entre l'appareil de fibrage et le tunnel de séchage.

5. Appareil selon la revendication 4 pour la mise en oeuvre du procédé selon la revendication 3, comportant plusieurs appareils de fibrage disposés à la suite les uns des autres et suivis du tunnel, et des buses disposées en dessous de chacun des appareils de fibrage pour l'introduction du liant dans le courant de fibres minérales dirigé vers le bas, caractérisé en ce que pour obtenir le changement en proportion de liant sous la dépendance de l'épaisseur et de la densité du matelas de fibres minérales les buses sont commandées et/ou elles ont un débit différent.

6. Pièce moulée formée en partant d'un matelas fabriqué par le procédé selon les revendications 1 à 3, pour le garnissage de silencieux de tuyaux d'échappement, en particulier de véhicules automobiles, dans laquelle la couche de fibres métalliques est tournée vers l'intérieur de la cavité conduisant les gaz d'échappement.